# EUROPEAN PATENT APPLICATION

(11) **EP 4 770 253 A1**
(43) Date of publication of application: **01.07.2026**
(21) Application number: 23949361.2
(22) Date of filing: 21.08.2023
(51) Int. Cl.: H04W 74/08

(54) **RANDOM ACCESS METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Gunzelmann, Rainer
(86) International application number: PCT/CN2023/114090
(87) International publication number: WO 2025/039168

(57) **Abstract**

Disclosed in embodiments of the present disclosure are a random access method and apparatus. The method comprises: in target random access occasions (ROs), repeatedly sending a physical random access channel (PRACH) to a network device, wherein the number of the target ROs is the same as the number of transmissions of the PRACH, a plurality of candidate ROs comprise the target ROs, and a mapping relationship exists between the plurality of candidate ROs and one synchronization signal and physical broadcast channel block (SSB) index, or, a mapping relationship exists between the plurality of candidate ROs and one SSB index set. A random access resource can be more reasonably configured for a terminal, thereby effectively increasing the resource utilization rate, avoiding resource waste, improving the system communication efficiency, and increasing the success rate of random access.

## Description

### FIELD

The present disclosure relates to the field of communication technologies, and more particularly to a random access method, a random access device, a communication device, a communication system and a storage medium.

### BACKGROUND

A physical random access channel (PRACH) may be transmitted many times in a time domain, to enhance the PRACH coverage. For multiple PRACH transmissions, a shared random access channel (RACH) occasion (RO) may also be supported.

### SUMMARY

Embodiments of the present disclosure provide a random access method, a random access device, a communication device, a communication system and a storage medium.

Embodiments of a first aspect of the present disclosure propose a random access method, which is performed by a terminal, and includes: repeatedly transmitting a physical random access channel (PRACH) to a network device in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

Embodiments of a second aspect of the present disclosure propose a random access method, which is performed by a network device, and includes: receiving a physical random access channel (PRACH) repeatedly transmitted by a terminal in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

Embodiments of a third aspect of the present disclosure propose a random access method, which includes: repeatedly transmitting, by a terminal, a physical random access channel (PRACH) to a network device in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

Embodiments of a fourth aspect of the present disclosure propose a terminal, which includes: a transceiver module configured to repeatedly transmit a physical random access channel (PRACH) to a network device in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

Embodiments of a fifth aspect of the present disclosure propose a network device, which includes: a transceiver module configured to receive a physical random access channel (PRACH) repeatedly transmitted by a terminal in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

In the schemes proposed by the embodiments of the present disclosure, the physical random access channel (PRACH) is repeatedly transmitted to the network device in the target random access channel occasion (RO), where the number of the target RO is the same as the number of transmissions of the PRACH, the target RO is included in the plurality of candidate ROs, and the plurality of candidate ROs have the mapping relationship with the synchronization signal and physical broadcast channel block (SSB) index, or the plurality of candidate ROs have the mapping relationship with the SSB index set. Thus, the resources for random access may be configured for the terminal more reasonably, thereby effectively improving the resource utilization rate, avoiding the waste of resources, enhancing the system communication efficiency, and improving the success rate of random access.

### BRIEF DESCRIPTION OF THE DRAWINGS

In order to more clearly explain the technical scheme in embodiments of the present disclosure or the related art, drawings needed to be used in the embodiments of the present disclosure or the related art will be explained below.
Fig. 1 is a schematic architecture diagram of a communication system provided by an embodiment of the present disclosure.
Fig. 2A is a schematic interaction diagram of a random access method provided by an embodiment of the present disclosure.
Fig. 2B is a schematic interaction diagram of a random access method provided by an embodiment of the present disclosure.
Fig. 3A is a flowchart of a random access method provided by an embodiment of the present disclosure.
Fig. 3B is a flowchart of a random access method provided by an embodiment of the present disclosure.
Fig. 4A is a flowchart of a random access method provided by an embodiment of the present disclosure.
Fig. 4B is a flowchart of a random access method provided by an embodiment of the present disclosure.
Fig. 5 is a flowchart of a random access method provided by an embodiment of the present disclosure.
Fig. 6A is a block diagram of a terminal provided by an embodiment of the present disclosure.
Fig. 6B is a block diagram of a network device provided by an embodiment of the present disclosure.
Fig. 7A is a block diagram of a communication device provided by an embodiment of the present disclosure.
Fig. 7B is a block diagram of a chip provided by an embodiment of the present disclosure.

### DETAILED DESCRIPTION

Embodiments of the present disclosure provide a random access method, a random access device, a communication device, a communication system and a storage medium.

In a first aspect, embodiments of the present disclosure propose a random access method, which is performed by a terminal, and includes: repeatedly transmitting a physical random access channel (PRACH) to a network device in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

In the above embodiments, the resources for random access may be configured for the terminal more reasonably, thus effectively improving the resource utilization rate, avoiding the waste of resources, enhancing the system communication efficiency, and improving the success rate of random access.

In combination with some embodiments of the first aspect, in some embodiments, the method further incudes receiving first information transmitted by the network device, and the first information is configured to determine the target RO from the plurality of candidate ROs.

In the above embodiments, the resources for multiple PRACH transmissions may be determined based on the indication information transmitted by the network device, and the resources for random access may be configured for the terminal more reasonably, thus effectively improving the resource utilization rate, avoiding the waste of resources, enhancing the system communication efficiency, and improving the success rate of random access.

In combination with some embodiments of the first aspect, in some embodiments, the first information indicates one or more groups of ROs among the plurality of candidate ROs, where each group of the one or more groups of ROs includes a first quantity of ROs in a time domain, the first quantity is the same as the number of transmissions of the PRACH, and the target RO is one group of the one or more groups of ROs indicated by the first information.

In the above embodiments, an indication mode may be flexibly selected to indicate a RO in a random access resource configuration to the terminal, so as to support various multi-PRACH transmission scenarios, so that the resources for random access may be configured more reasonably and optimally, thus effectively improving the resource utilization rate, avoiding the waste of resources, enhancing the system communication efficiency, improving the success rate of random access, and improving the flexibility of the scheme. Further, adopting the indication mode based on RO groups may effectively save signaling overhead.

In combination with some embodiments of the first aspect, in some embodiments, the first information indicates one or more ROs among the plurality of candidate ROs, and frequency domain positions of the ROs indicated by the first information are different, where the target RO has a same frequency domain position, and the frequency domain position of the target RO is one of the frequency domain positions of the one or more ROs indicated by the first information.

In the above embodiments, an indication mode may be flexibly selected to indicate a RO in a random access resource configuration to the terminal, so as to support various multi-PRACH transmission scenarios, so that the resources for random access may be configured more reasonably and optimally, thus effectively improving the resource utilization rate, avoiding the waste of resources, enhancing the system communication efficiency, improving the success rate of random access, and improving the flexibility of the scheme.

In combination with some embodiments of the first aspect, in some embodiments, the target RO has a mapping relationship with an SSB index.

In the above embodiments, the resource indication under a one-to-many mapping between SSB and RO is realized, so that the resources for random access may be configured more reasonably and optimally, thus effectively improving the resource utilization rate, avoiding the waste of resources, and improving the system communication efficiency.

In combination with some embodiments of the first aspect, in some embodiments, the one or more ROs indicated by the first information have a mapping relationship with an SSB index set.

In the above embodiments, the resource indication under a one-to-many mapping between SSB and RO is realized, so that the resources for random access may be configured more reasonably and optimally, thus effectively improving the resource utilization rate, avoiding the waste of resources, and improving the system communication efficiency.

In combination with some embodiments of the first aspect, in some embodiments, the first information indicates a plurality of ROs among the plurality of candidate ROs, where the first information includes a first information field and a second information field, the first information field indicates time domain positions of the plurality of ROs, the second information field indicates frequency domain positions of the plurality of ROs, and the plurality of ROs indicated by the first information include the target RO.

In the above embodiments, an indication mode may be flexibly selected to indicate a RO in a random access resource configuration to the terminal, so as to support various multi-PRACH transmission scenarios, so that the resources for random access may be configured more reasonably and optimally, thus effectively improving the resource utilization rate, avoiding the waste of resources, enhancing the system communication efficiency, improving the success rate of random access, and improving the flexibility of the scheme.

In combination with some embodiments of the first aspect, in some embodiments, the first information indicates one or more ROs among the plurality of candidate ROs, and frequency domain positions of the ROs indicated by the first information are different, where the target RO is frequency-hopped, a starting frequency domain position of the target RO is one of the frequency domain positions of the one or more ROs indicated by the first information, and a frequency domain position of the target RO is determined based on the starting frequency domain position and a frequency hopping offset.

In the above embodiments, a RO in a random access resource configuration may be flexibly indicated to the terminal, so as to support various multi-PRACH transmission scenarios, so that the resources for random access may be configured more reasonably and optimally, thus effectively improving the resource utilization rate, avoiding the waste of resources, enhancing the system communication efficiency, improving the success rate of random access, and improving the flexibility of the scheme.

In combination with some embodiments of the first aspect, in some embodiments, the first information indicates one or more groups of ROs in a first time period, where each group of the one or more groups of ROs includes a first quantity of ROs in a time domain, the first quantity is the same as the number of transmissions of the PRACH, and the target RO is one group of the one or more groups of ROs indicated by the first information.

In the above embodiments, a RO in a random access resource configuration may be flexibly indicated to the terminal, so that the resources for random access may be configured more reasonably and optimally, thus effectively improving the resource utilization rate, avoiding the waste of resources, enhancing the system communication efficiency, and improving the success rate of random access.

In combination with some embodiments of the first aspect, in some embodiments, the first information has a corresponding relationship with the number of transmissions of the PRACH.

In the above embodiments, different ROs may be configured for multiple PRACH transmission numbers of terminals sharing the same random access resource configuration, so that the resources for random access may be configured more reasonably and optimally, thus effectively improving the resource utilization rate, avoiding the waste of resources, enhancing the system communication efficiency, and improving the success rate of random access.

In combination with some embodiments of the first aspect, in some embodiments, the first information has a corresponding relationship with a feature or a feature combination supported by the terminal.

In the above embodiments, this may avoid causing too much interference to other features or feature combinations sharing the same random access resource configuration in a scenario that a cell supports multiple PRACH transmissions.

In a second aspect, embodiments of the present disclosure proposes a random access method, which is performed by a network device, and includes: receiving a physical random access channel (PRACH) repeatedly transmitted by a terminal in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

In the above embodiments, the resources for random access may be configured for the terminal more reasonably, thus effectively improving the resource utilization rate, avoiding the waste of resources, enhancing the system communication efficiency, and improving the success rate of random access.

In combination with some embodiments of the second aspect, in some embodiments, the method further includes transmitting first information to the terminal, where the first information is configured to determine the target RO from the plurality of candidate ROs.

In combination with some embodiments of the second aspect, in some embodiments, the first information indicates one or more groups of ROs among the plurality of candidate ROs, where each group of the one or more groups of ROs includes a first quantity of ROs in a time domain, the first quantity is the same as the number of transmissions of the PRACH, and the target RO is one group of the one or more groups of ROs indicated by the first information.

In combination with some embodiments of the second aspect, in some embodiments, the first information indicates one or more ROs among the plurality of candidate ROs, and frequency domain positions of the ROs indicated by the first information are different, where the target RO has a same frequency domain position, and the frequency domain position of the target RO is one of the frequency domain positions of the one or more ROs indicated by the first information.

In combination with some embodiments of the second aspect, in some embodiments, the target RO has a mapping relationship with an SSB index.

In combination with some embodiments of the second aspect, in some embodiments, the one or more ROs indicated by the first information have a mapping relationship with an SSB index set.

In combination with some embodiments of the second aspect, in some embodiments, the first information indicates a plurality of ROs among the plurality of candidate ROs, where the first information includes a first information field and a second information field, the first information field indicates time domain positions of the plurality of ROs, the second information field indicates frequency domain positions of the plurality of ROs, and the plurality of ROs indicated by the first information include the target RO.

In combination with some embodiments of the second aspect, in some embodiments, the first information indicates one or more ROs among the plurality of candidate ROs, and frequency domain positions of the ROs indicated by the first information are different, where the target RO is frequency-hopped, a starting frequency domain position of the target RO is one of the frequency domain positions of the one or more ROs indicated by the first information, and a frequency domain position of the target RO is determined based on the starting frequency domain position and a frequency hopping offset.

In combination with some embodiments of the second aspect, in some embodiments, the first information indicates one or more groups of ROs in a first time period, where each group of the one or more groups of ROs includes a first quantity of ROs in a time domain, the first quantity is the same as the number of transmissions of the PRACH, and the target RO is one group of the one or more groups of ROs indicated by the first information.

In combination with some embodiments of the second aspect, in some embodiments, the first information has a corresponding relationship with the number of transmissions of the PRACH.

In combination with some embodiments of the second aspect, in some embodiments, the first information has a corresponding relationship with a feature or a feature combination supported by the terminal.

In a third aspect, embodiments of the present disclosure propose a random access method, which includes: repeatedly transmitting, by a terminal, a physical random access channel (PRACH) to a network device in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

In the above embodiments, the resources for random access may be configured for the terminal more reasonably, thus effectively improving the resource utilization rate, avoiding the waste of resources, enhancing the system communication efficiency, and improving the success rate of random access.

In combination with some embodiments of the third aspect, in some embodiments, the above method further includes: the network device transmitting first information to the terminal, where the first information is configured to determine the target RO from the plurality of candidate ROs.

In combination with some embodiments of the third aspect, in some embodiments, the first information indicates one or more groups of ROs among the plurality of candidate ROs, where each group of the one or more groups of ROs includes a first quantity of ROs in a time domain, the first quantity is the same as the number of transmissions of the PRACH, and the target RO is one group of the one or more groups of ROs indicated by the first information.

In combination with some embodiments of the third aspect, in some embodiments, the first information indicates one or more ROs among the plurality of candidate ROs, and frequency domain positions of the ROs indicated by the first information are different, where the target RO has a same frequency domain position, and the frequency domain position of the target RO is one of the frequency domain positions of the one or more ROs indicated by the first information.

In combination with some embodiments of the third aspect, in some embodiments, the target RO has a mapping relationship with an SSB index.

In combination with some embodiments of the third aspect, in some embodiments, the one or more ROs indicated by the first information have a mapping relationship with an SSB index set.

In combination with some embodiments of the third aspect, in some embodiments, the first information indicates a plurality of ROs among the plurality of candidate ROs, where the first information includes a first information field and a second information field, the first information field indicates time domain positions of the plurality of ROs, the second information field indicates frequency domain positions of the plurality of ROs, and the plurality of ROs indicated by the first information include the target RO.

In combination with some embodiments of the third aspect, in some embodiments, the first information indicates one or more ROs among the plurality of candidate ROs, and frequency domain positions of the ROs indicated by the first information are different, where the target RO is frequency-hopped, a starting frequency domain position of the target RO is one of the frequency domain positions of the one or more ROs indicated by the first information, and a frequency domain position of the target RO is determined based on the starting frequency domain position and a frequency hopping offset.

In combination with some embodiments of the third aspect, in some embodiments, the first information indicates one or more groups of ROs in a first time period, where each group of the one or more groups of ROs includes a first quantity of ROs in a time domain, the first quantity is the same as the number of transmissions of the PRACH, and the target RO is one group of the one or more groups of ROs indicated by the first information.

In combination with some embodiments of the third aspect, in some embodiments, the first information has a corresponding relationship with the number of transmissions of the PRACH.

In combination with some embodiments of the third aspect, in some embodiments, the first information has a corresponding relationship with a feature or a feature combination supported by the terminal.

In a fourth aspect, embodiments of the present disclosure propose a terminal, which includes at least one of a transceiver module and a processing module, where the terminal is configured to execute the first aspect and the optional implementations of the first aspect.

In a fifth aspect, embodiments of the present disclosure propose a network device, which includes at least one of a transceiver module and a processing module, where the network device is configured to execute the second aspect and the optional implementations of the second aspect.

In a sixth aspect, embodiments of the present disclosure propose a terminal, which includes one or more processors, where the terminal is configured to execute the first aspect and the optional implementations of the first aspect.

In a seventh aspect, embodiments of the present disclosure propose a network device, which includes one or more processors, where the network device is configured to execute the second aspect and the optional implementations of the second aspect.

In an eighth aspect, embodiments of the present disclosure propose a communication system, which includes a terminal and a network device, where the terminal is configured to perform the methods described in the first aspect and the optional implementations of the first aspect, and the network device is configured to perform the method described in the second aspect and the optional implementations of the second aspect.

In a ninth aspect, embodiments of the present disclosure propose a storage medium storing instructions which, when executed on a communication device, cause the communication device to perform the methods described in the first aspect and the optional implementations of the first aspect, and the second aspect and the optional implementations of the second aspect.

In a tenth aspect, embodiments of the present disclosure propose a program product, which, when executed by a communication device, causes the communication device to perform the methods described in the first aspect and the optional implementations of the first aspect, and the second aspect and the optional implementations of the second aspect.

In an eleventh aspect, embodiments of the present disclosure propose a computer program, which, when run on a computer, causes the computer to perform the methods described in the first aspect and the optional implementations of the first aspect, and the second aspect and the optional implementations of the second aspect.

In a twelfth aspect, embodiments of the present disclosure propose a chip or a chip system. The chip or the chip system includes a processing circuit, and the processing circuit is configured to perform the methods described in the first aspect and the optional implementations of the first aspect, and the second aspect and the optional implementations of the second aspect.

It may be understood that the above terminal, network device, communication system, storage medium, program product, computer program, chip or chip system are all used to perform the methods proposed in the embodiments of the present disclosure. Therefore, the beneficial effects they may achieve may refer to the beneficial effects in the corresponding methods, and will not be repeated here.

Embodiments of the present disclosure propose a random access method, a random access device, a communication device, a communication system and a storage medium. In some embodiments, the terms such as random access method, communication method and the like may be used interchangeably, the terms such as random access device, communication device and the like may be used interchangeably, and the terms random access system, communication system and the like may be used interchangeably.

The embodiments of the present disclosure are not exhaustive, but only schematic illustrations of some embodiments, and are not taken as specific limitations on the protection scope of the present disclosure. Without contradiction, each step in an embodiment may be implemented as an independent embodiment, and various steps may be arbitrarily combined. For example, the scheme after removing some steps in an embodiment may also be implemented as an independent embodiment, and the orders of various steps in an embodiment may be arbitrarily exchanged. In addition, optional implementations in an embodiment may be arbitrarily combined. In addition, various embodiments may be arbitrarily combined, for example, some or all steps of different embodiments may be arbitrarily combined, and an embodiment may be arbitrarily combined with optional implementations of another embodiment.

In the embodiments of the present disclosure, unless there are special explanations and logical conflicts, the terms and/or descriptions among the embodiments are consistent and may be quoted from each other, and the technical features in different embodiments may be combined to form a new embodiment according to their inherent logical relations.

The terms used in the embodiments of the present disclosure are only for the purpose of describing specific embodiments, and are not used as limitations on the present disclosure.

In the embodiments of the present disclosure, unless otherwise stated, elements expressed in a singular form, such as "a", "an", "the", "said", "foregoing", "aforementioned", "preceding", "this", etc., may refer to "one and only one" or "one or more", "at least one", etc. For example, when an article such as "a", "an", or "the" is used in translation, the noun following the article may be understood as a singular expression or a plural expression.

In the embodiments of the present disclosure, "a/the plurality of" refers to two or more.

In some embodiments, terms such as "at least one of", "one or more", "a plurality of", "multiple", etc., may be used interchangeably.

In some embodiments, expressions such as "at least one of A and B", "A and/or B", "in a case, A, and in another case, B", "in response to a case, A, and in response to another case, B", etc., may include the following technical solutions depending on the situation: in some embodiments, A (performing A independently of B); in some embodiments, B (performing B independently of A); in some embodiments, selecting to perform A or B (performing A and B selectively); in some embodiments, both A and B (performing both A and B). When there are more branches such as A, B, C, etc., the above similarly applies.

In some embodiments, expressions such as "A or B" may include the following technical solutions depending on the situation: in some embodiments, A (performing A independently of B); in some embodiments, B (performing B independently of A); in some embodiments, selecting to perform A or B (performing A and B selectively). When there are more branches such as A, B, C, etc., the above similarly applies.

Prefix terms such as "first", "second", etc., in the embodiments of the present disclosure are only used to distinguish different described objects, and do not limit the position, order, priority, quantity, or content of the described objects. The description of the objects refers to the context of the claims or embodiments, and should not be construed as redundant limitations due to the use of the prefix terms. For example, if the described object is a "field", the ordinal numbers before "field" in a "first field" and a "second field" do not limit the position or order of the "fields", and "first" and "second" do not limit whether the "fields" they modify are in the same message, nor do they limit the sequence of the "first field" and the "second field". For another example, if the described object is a "level", the ordinal numbers before "level" in a "first level" and a "second level" do not limit the priority between the "levels". For another example, the quantity of the described objects is not limited by the ordinal numbers and may be one or more. Taking a "first device" as an example, the quantity of the "device" may be one or more. In addition, objects modified by different prefix terms may be the same or different. For example, if the described object is a "device", a "first device" and a "second device" may be the same device or different devices, and their types may be the same or different. For another example, if the described object is "information", "first information" and "second information" may be the same information or different information, and their content may be the same or different.

In some embodiments, "comprising A", "including A", "indicating A", and "carrying A" may be interpreted as directly carrying A or indirectly indicating A.

In some embodiments, terms such as "in response to...", "in response to determining...", "in a case of...", "when...", "if...", etc., may be used interchangeably.

In some embodiments, terms such as "greater than", "greater than or equal to", "not less than", "more than", "more than or equal to", "not fewer than", "higher than", "higher than or equal to", "not lower than", "above", etc., may be used interchangeably; and terms such as "less than", "less than or equal to", "not greater than", "fewer than", "fewer than or equal to", "not more than", "lower than", "lower than or equal to", "not higher than", "below", etc., may be used interchangeably.

In some embodiments, apparatuses and devices may be interpreted as physical or virtual, and their names are not limited to those recorded in the embodiments, but may also be understood as "equipment", "device", "circuit", "network element", "node", "function", "unit", "section", "system", "network", "chip", "chip system", "entity", "subject" and the like in some cases.

In some embodiments, "network" may be interpreted as a device included in a network, such as an access network device, a core network device, and the like.

In some embodiments, "access network device (AN device)" may also be referred to as "radio access network device (RAN device)", "base station (BS)", "radio base station" and "fixed station", and may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like in some embodiments.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc., may comply with the laws and regulations of the country where the obtainment takes place.

In some embodiments, data, information, etc., may be obtained with a user's consent.

In addition, each element, each row, or each column in tables of the embodiments of the present disclosure may be implemented as an independent embodiment, and any combination of any elements, any rows, or any columns may also be implemented as an independent embodiment.

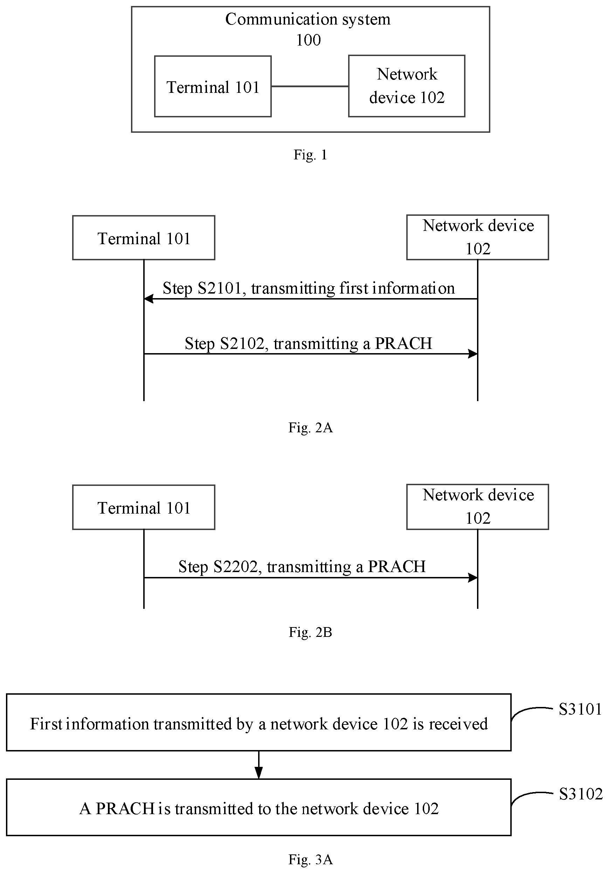

Fig. 1 is a schematic architecture diagram of a communication system according to an embodiment of the present disclosure.

As shown in Fig. 1, a communication system 100 includes a terminal 101 and a network device 102.

In some embodiments, the terminal 101 may include at least one of, for example, a mobile phone, a wearable device, an Internet of Things device, a vehicle with a communication function, a smart vehicle, a tablet computer (Pad), a computer with wireless transmitting and receiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to this.

In some embodiments, the network device 102 is, for example, a node or device that connects a terminal to a wireless network, and the network device may include at least one of: an evolved node B (eNB) in a 5G communication system, a next-generation evolved node B (ng-eNB), a next-generation node B (gNB), a node B (NB), a home node B (HNB), a home evolved node B (HeNB), a wireless backhaul device, a radio network controller (RNC), a base station controller (BSC), a base transceiver station (BTS), a baseband unit (BBU), a mobile switching center, a base station in a 6G communication system, an Open RAN, a cloud RAN, a base station in other communication systems, and an access node in a wireless fidelity (WiFi) system, but is not limited to this.

In some embodiments, the technical solutions of the present disclosure may be applied to an open RAN architecture. In this case, interfaces between the access network devices or within the access network devices involved in the embodiments of the present disclosure may become internal interfaces of the Open RAN, and processes and information interactions between these internal interfaces may be implemented through software or programs.

In some embodiments, the network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

It may be understood that the communication system described in the embodiments of the present disclosure is for more clearly explaining the technical scheme of the embodiments of the present disclosure, and does not constitute a limitation on the technical scheme proposed in the embodiments of the present disclosure. It is known by those ordinary skilled in the related art that with the evolution of the system architecture and the emergence of new business scenarios, the technical scheme proposed in the embodiments of the present disclosure is also applicable to similar technical problems.

The following embodiments of the present disclosure may be applied to the communication system 100 shown in Fig. 1, or some entities thereof, but the present disclosure is not limited to this. Each entity shown in Fig. 1 is an example. The communication system may include all or part of the entities in Fig. 1, and other entities other than Fig. 1. The number and form of each entity are arbitrary, and each entity may be physical or virtual. The connection relationship between entities is an example. The entities may be disconnected or connected, and the connection thereof may be of any form, for example, may be direct connection or indirect connection, or may be wired connection or wireless connection.

The embodiments of the present disclosure may be applied to long-term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, machine-to-machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A and 5G) for application.

In some embodiments, sharing part of random access channel (RACH) occasions (ROs) of contention free random access (CFRA) is supported.

As an example, for a PRACH resource configured for a 4-step random access channel (4-step RACH), when one synchronization signal and physical broadcast channel (PBCH) block (SSB) is mapped to multiple ROs (i.e., N<1, where N represents a mapping ratio of SSB to RO, and N<1 represents that one SSB is mapped to multiple ROs, for example, N=1/4 represents that one SSB is mapped to four ROs), sharing part of the ROs to a 2-step random access channel (2-step RACH) is also supported.

Optionally, a physical random access channel (PRACH) mask configured by a system information block (SIB) (specifically, the SIB may be, for example, SIB1) may indicate one of indexes in the following table, corresponding to a PRACH occasion that the 2-step RACH may use. The PRACH mask index may be indicated by an information element (IE) *msgA-SSB-SharedRO-MaskIndex.*

**Table 1 PRACH mask index values**

| **PRACH Mask *Index*/*msgA-SSB-SharedRO-MaskIndex*** | **Allowed PRACH occasion(s) of SSB** |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Reserved |
| 12 | Reserved |
| 13 | Reserved |
| 14 | Reserved |
| 15 | Reserved |

In some embodiments, for a feature combination, the configuration of a RO mask index is also introduced.

Optionally, the RO mask index means that, in case of a configured RACH resource where one SSB corresponds to multiple ROs, when a set of preambles are shared by one feature combination (e.g., reduced capability, RedCap) and small data transmission (SDT), one IE (e.g., *ssb-sharedRO-maskIndex-r17*) in the configuration may indicate which RO may be used by the feature combination, similar to the shared RO of the aforementioned 2-step RACH. Different feature combinations may use different RO mask indexes.

In some embodiments, the terminal may transmit the PRACH multiple times in a time domain, which is also called multiple PRACH transmissions, so that the PRACH coverage may be enhanced.

As an example, for multiple PRACH transmissions, the network device may select one or more from a plurality of transmission numbers, such as {2, 4, 8}, and configure them to the terminal as the number of transmissions of the PRACH.

In some embodiments, for multiple PRACH transmissions, a RO group may be introduced. One RO group corresponds to one transmission number configured by the network device. After determining a specific transmission number, the terminal selects the RO group corresponding to the transmission number for multiple PRACH transmissions.

Optionally, for multiple PRACH transmissions with the same transmit (Tx) beam, the RO group is used for multiple PRACH transmissions with a separate preamble on a shared RO; and/or, the RO group is used for multiple PRACH transmissions on a separate RO, where one RO group includes at least one valid RO for multiple PRACH transmissions with a specific transmission number.

Optionally, all the ROs in one RO group may be associated with the same SSB index.

Optionally, the shared RO/preamble means that a RO/preamble shared by a single PRACH transmission is used.

A separate RO/preamble means that a RO/preamble different from a RO/preamble used by a single PRACH transmission is used.

Optionally, multiple PRACH transmissions in one random access (RACH) attempt are performed in one RO group.

Optionally, the number of valid ROs in the RO group is equal to one of the configured multiple PRACH transmission numbers (for example, {2, 4, 8}).

Optionally, when only one value is configured for the PRACH transmission number, the number of valid ROs in the RO group is equal to this value.

Optionally, when multiple values are configured for the PRACH transmission number, for each value, the number of valid ROs in the RO group corresponding to each value is equal to the corresponding value.

In some embodiments, for multiple PRACH transmissions, in order to avoid affecting the legacy RACH of the terminal as much as possible, the legacy RACH and multiple PRACH transmissions may be distinguished by separate PRACH resources. In addition, different transmission numbers may also be distinguished by different PRACH resources. The separate PRACH resource may be a shared RO with different preambles or a separate RO.

Optionally, a possible configuration mode is to configure multiple PRACH resources through a feature combination. The RO mask index may indicate which ROs may be used by the feature or feature combination.

To sum up, the definition of RO mask index in the related art is not suitable for multiple PRACH transmissions, and a new definition of RO mask index needs to be considered.

The random access method and device provided by the present disclosure will be described in detail with reference to the accompanying drawings.

Fig. 2A is a schematic interaction diagram of a random access method according to an embodiment of the present disclosure. As shown in Fig. 2A, the embodiment of the present disclosure relates to a random access method, which includes the following steps.

In step S2101, a network device 102 transmits first information to a terminal 101.

In some embodiments, the first information is configured to determine a plurality of target ROs from a plurality of candidate ROs.

In some embodiments, the plurality of candidate ROs include the plurality of target ROs.

In some embodiments, the plurality of candidate ROs have a mapping relationship with the same SSB index.

In some embodiments, the plurality of candidate ROs have a mapping relationship with the same SSB index set.

Optionally, the plurality of candidate ROs may be configured to different features or feature combinations for use.

In some embodiments, the plurality of target ROs are used for the terminal 101 to repeatedly transmit a PRACH to the network device 102 on the plurality of target ROs, for multiple PRACH transmissions.

In some embodiments, the number of the target ROs is the same as the number of transmissions of the PRACH.

In some embodiments, the first information indicates one or more groups of ROs among the plurality of candidate ROs.

Each group of the one or more groups of ROs includes a first quantity of ROs in a time domain, the first quantity is the same as the number of transmissions of the PRACH, and the plurality of target ROs are one group of the one or more groups of ROs indicated by the first information.

As an example, it is assumed that a mapping ratio from SSB to RO (SSB-to-RO) is N=1/16, FDMed RO=1 (frequency-division multiplexing, FDM), and PRACH repetition number=4.

N=1/16 means that one SSB is mapped to 16 ROs, that is, 16 ROs are associated with one SSB index; FDMed RO=1 means that the above ROs only corresponds to one frequency domain position in a frequency domain; and PRACH repetition number=4 means that the number of repeated transmissions of the PRACH is 4.

The above parameters mean that one SSB may be mapped to four groups of ROs (or four time domain RO groups), and each group of ROs (or each RO group) includes four ROs in the time domain.

Optionally, the four groups of ROs (16 ROs) to which the one SSB is mapped may be candidate ROs.

Optionally, the first information may indicate one or more groups of the above four groups of ROs (candidate ROs), and the one or more groups of ROs indicated by the first information may be used for multiple PRACH transmissions. The terminal may select one group as the target ROs from the one or more groups of ROs indicated by the first information, and perform multiple PRACH transmissions on the target ROs.

Optionally, multiple PRACH transmissions will not be performed on the remaining unselected ROs.

As another example, it is assumed that the mapping ratio from SSB to RO (SSB-to-RO) is N=1/16, FDMed RO=2, and PRACH repetition number=4.

N=1/16 means that one SSB is mapped to 16 ROs, that is, 16 ROs are associated with one SSB index; FDMed RO=2 means that the above ROs correspond to two frequency domain positions in the frequency domain; and PRACH repetition number=4 means that the number of repeated transmissions of the PRACH is 4.

The above parameters mean that one SSB may be mapped to two groups of ROs (or two time domain RO groups), and each group of ROs (or each RO group) includes four ROs in the time domain.

Optionally, the two groups of ROs (16 ROs) to which the one SSB is mapped may be candidate ROs.

Optionally, the first information may indicate one or more groups of the above two groups of ROs (candidate ROs), and the one or more groups of ROs indicated by the first information may be used for multiple PRACH transmissions. The terminal may select one group as the target ROs from the one or more groups of ROs indicated by the first information, and perform multiple PRACH transmissions on the target ROs.

Optionally, multiple PRACH transmissions will not be performed on the remaining unselected ROs.

In some embodiments, the first information indicates one or more ROs among the plurality of candidate ROs, where frequency domain positions of the ROs indicated by the first information are different.

The plurality of target ROs have the same frequency domain position, and the frequency domain position of the plurality of target ROs is one of the frequency domain positions of the one or more ROs indicated by the first information.

Optionally, the plurality of target ROs have a mapping relationship with an SSB index.

Optionally, the one or more ROs indicated by the first information have a mapping relationship with an SSB index set.

As an example, it is assumed that the mapping ratio from SSB to RO (SSB-to-RO) is N=1/32, FDMed RO=4, and PRACH repetition number=n, where n is a positive integer.

N=1/32 means that one SSB is mapped to 32 ROs, that is, 32 ROs are associated with one SSB index; FDMed RO=4 means that the above ROs correspond to four frequency domain positions in the frequency domain; and PRACH repetition number=n means that the number of repeated transmissions of the PRACH is n.

Optionally, the 32 ROs to which the one SSB is mapped may be candidate ROs.

Optionally, the first information may indicate one or more of the candidate ROs, and frequency domain positions of the ROs indicated by the first information are different (or the first information may indicate one or more of the four FDMed ROs). The terminal may select one RO from the one or more ROs indicated by the first information as the RO for the first repeated PRACH transmission, and perform subsequent PRACH transmissions at the frequency domain position of the RO. That is, the terminal may select the frequency domain position of one RO from the one or more ROs indicated by the first information as the frequency domain position of the target RO, and the plurality of target ROs have the same frequency domain position. The ROs adopted by different PRACH transmissions are mapped to the same SSB.

Optionally, the four FDMed ROs are associated with the same SSB index set.

Optionally, when there is a mapping relationship between multiple SSB indexes and one RO (i.e., N>1), the RO may also be selected and indicated by the indication mode of the above first information. A RO corresponding to any one of a plurality of SSB indexes indicated by an SSB burst may be selected.

In some embodiments, the first information indicates one or more ROs among the plurality of candidate ROs.

The first information includes a first information field and a second information field, the first information field indicates time domain positions of the one or more ROs, the second information field indicates frequency domain positions of the one or more ROs, and the one or more ROs indicated by the first information include the target ROs.

As an example, it is assumed that one SSB is mapped to N ROs, and the first information may indicate M ROs among the N ROs, where M is less than or equal to N. M may be the same as a transmission number K of the PRACH, or an integer multiple of K, or M may be an arbitrary value. N ROs may be N ROs in the time domain, or N ROs in the frequency domain, or N is the number of ROs whose time domain positions and frequency domain positions are numbered together (for example, N ROs to which one SSB is mapped are numbered in the frequency domain first and then in the time domain, and then the first information may indicate M ROs for multiple PRACH transmissions from the N ROs by means of a bitmap or a codepoint). The terminal may select the target ROs for multiple PRACH transmissions from the M ROs that may be used for multiple PRACH transmissions.

Optionally, the first information may also include a first information field and a second information field, where the first information field (such as field#1) indicates a time domain position of an available RO, and the second information field (such as field#2) indicates a frequency domain position of the available RO.

Optionally, both the first information field and the second information field may be indicated by means of a bitmap, which is similar to a two-dimensional matrix. For example, only when (bit#m for field#1, bit#n for field#2) is (1, 1), it means that a RO whose time domain position is #m and frequency domain position is #n may be used for multiple PRACH transmissions.

In some embodiments, the first information indicates one or more ROs among the plurality of candidate ROs, and frequency domain positions of the ROs indicated by the first information are different.

The target RO is frequency-hopped, and a starting frequency domain position of the plurality of target ROs is one of the frequency domain positions of the one or more ROs indicated by the first information, and a frequency domain position of the plurality of target ROs is determined based on the starting frequency domain position and a frequency hopping offset.

As an example, the terminal may perform multiple PRACH transmissions by means of RO hopping. The first information may indicate one or more ROs with different frequency domain positions. The starting frequency domain position of the target RO (the frequency domain position of the RO for a first PRACH transmission among multiple PRACH transmissions) is one of the frequency domain positions of the one or more ROs indicated by the first information, and the frequency domain positions of subsequent PRACH transmissions may be determined based on the starting frequency domain position and the frequency hopping offset (for example, the frequency domain position of the RO for a second PRACH transmission among multiple PRACH transmissions is the starting frequency domain position+the frequency hopping offset).

In some embodiments, the first information indicates one or more groups of ROs in a first time period.

Each group of the one or more groups of ROs indicated by the first information includes a first quantity of ROs in a time domain, the first quantity is the same as the number of transmissions of the PRACH, and the target RO is one group of the one or more groups of ROs indicated by the first information.

For example, the first time period is "period X", and period X is a period of time defined for determining the pattern of the RO group when multiple PRACH transmissions are performed.

In some embodiments, multiple PRACH transmissions will not be performed on the remaining ROs among the candidate ROs not indicated by the first information.

In some embodiments, the first information may be configured by the network device 102, or may be carried in a physical downlink control channel (PDCCH) (for example, the first information may be included in downlink control information (DCI)).

Optionally, the first information may be represented in a designated information field of the DCI (its name is, for example, "RO mask index field", etc., which is not limited here), and the designated information field may be a multiplexed original information field or a newly defined information field that is added.

Optionally, if the bits in the original information field are not enough to indicate all possible situations, the reserved bits in the DCI may be used to represent the first information, for example, one bit or several bits among the reserved bits may be used to represent one or more values of the first information.

In some embodiments, the name of the first information is not limited, and it is, for example, "RO mask index", "RO mask indication", "RO indication" and so on.

In some embodiments, the first information may indicate the information described in any one or more of the above embodiments by means of a table. For example, the values of the first information and the indicated RO(s) corresponding to each value are listed in the table.

In some embodiments, the first information may also indicate the information described in any one or more of the above embodiments by means of a bitmap. For example, each bit in the bitmap corresponds to one RO. When a value of this bit is 1, it means that the RO corresponding to this bit is selected, and when a value of this bit is 0, it means that the RO corresponding to this bit is not selected (or when a value of this bit is 0, it means that the RO corresponding to this bit is selected, and when a value of this bit is 1, it means that the RO corresponding to this bit is not selected).

In some embodiments, the first information may also indicate the information described in any one or more of the above embodiments by means of a codepoint. For example, a 4-bit information field corresponds to 16 codepoints, and each codepoint corresponds to one RO selection mode.

In some embodiments, the first information has a corresponding relationship with the number of transmissions of the PRACH.

Optionally, different PRACH transmission numbers may correspond to different first information.

In some embodiments, the first information has a corresponding relationship with a feature or a feature combination supported by the terminal 101.

Optionally, different features or feature combinations may correspond to different first information.

In step S2102, the terminal 101 transmits the PRACH to the network device 102.

In some embodiments, the terminal 101 repeatedly transmits the PRACH to the network device 102 many times.

In some embodiments, the terminal 101 repeatedly transmits the PRACH to the network device 102 in the target RO.

In some embodiments, the terminal 101 may determine the target RO based on the first information transmitted by the network device 102.

In some embodiments, the names of information and the like are not limited to the names recorded in the embodiments, "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, the names of information and the like are not limited to the names recorded in the embodiments, "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "physical downlink shared channel (PDSCH)", "DL data" and the like may be used interchangeably, and terms such as "physical uplink shared channel (PUSCH)", "UL data" and the like may be used interchangeably.

In some embodiments, terms "radio", "wireless", "radio access network (RAN)", "access network (AN)" and "RAN-based" may be used interchangeably.

In some embodiments, terms such as "resource block (RB)", "physical resource block (PRB)", "sub-carrier group (SCG)", "resource element group (REG)", "PRB pair", "RB pair", "resource element (RE)" and "sub-carrier" may be used interchangeably.

In some embodiments, terms such as "acquire", "obtain", "get", "receive", "transmit", "bidirectionally transmit" and "transmit and/or receive" may be used interchangeably, and may be interpreted as receiving from other entities, obtaining from protocols, obtaining from higher layers, obtaining via processing by itself, independent realization and so on.

In some embodiments, terms such as "send", "emit", "report", "distribute", "transmit", "bidirectionally transmit", "transmit and/or receive" and the like may be used interchangeably.

In some embodiments, terms such as "certain", "preset", "predetermine", "set", "indicate", "particular", "arbitrary", "first" and the like may be used interchangeably, and "certain A", "preset A", "predetermined A", "set A", "indicated A", "particular A", "arbitrary A", "first A" and the like may be interpreted as an A pre-specified in a protocol, an A obtained through setting, configuration or indication, or a particular A, a certain A, an arbitrary A or a first A, which is not limited here.

In some embodiments, the determination or judgment may be made by a value (0 or 1) represented by one bit, by a true or false value (boolean) represented as true or false, or a numerical comparison (for example, comparison with a predetermined value), which it is not limited here.

The communication method according to the embodiments of the present disclosure may include at least one of step S2101 to step S2102. For example, step S2101 may be implemented as an independent embodiment, step S2102 may be implemented as an independent embodiment, steps S2101+S2102 may be implemented as an independent embodiment, and so on, but the present disclosure is not limited to this.

In some embodiments, step S2101 is optional, and this step may be omitted or replaced in different embodiments.

In some embodiments, reference may be made to other optional implementations described before or after the description corresponding to Fig. 2A.

Fig. 2B is a schematic interaction diagram of a random access method according to an embodiment of the present disclosure. As shown in Fig. 2B, the embodiment of the present disclosure relates to a random access method, which includes the following steps.

In step S2201, a terminal 101 transmits a PRACH to a network device 102.

In some embodiments, the terminal 101 repeatedly transmits the PRACH to the network device 102 many times.

In some embodiments, the terminal 101 repeatedly transmits the PRACH to the network device in a target RO.

In some embodiments, the terminal 101 may determine the target RO from a plurality of candidate ROs.

In some embodiments, the plurality of candidate ROs include a plurality of target ROs.

In some embodiments, the plurality of candidate ROs have a mapping relationship with the same SSB index.

In some embodiments, the plurality of candidate ROs have a mapping relationship with the same SSB index set.

Optionally, the plurality of candidate ROs may be configured to different features or feature combinations for use.

In some embodiments, the plurality of target ROs are used for the terminal 101 to repeatedly transmit the PRACH to the network device 102 on the plurality of target ROs, for multiple PRACH transmissions.

In some embodiments, the number of the target RO is the same as the number of transmissions of the PRACH.

In some embodiments, for the terminal 101 performing multiple PRACH transmissions, it may not support that the first information is configured to indicate the RO that may be used for multiple PRACH transmissions.

It may be understood that in the above embodiment, the sharing of the RO is still supported, but one or several ROs, which may be used for multiple PRACH transmissions, will not be indicated to the terminal 101 through the first information.

Optionally, when multiple PRACH transmissions use the same PRACH resource (shared RO) as other feature combinations, the first information is also not configured.

In some embodiments, the name of the first information is not limited, and it is, for example, "RO mask index", "RO mask indication", "RO indication" and so on.

In some embodiments, not supporting the configuration of the first information may mean that when multiple PRACH transmissions are initiated, the terminal may ignore the information field (or field) where the first information is located; or, it may also mean that when multiple PRACH transmissions are initiated, the information field (or field) where the first information is located is not included in a PDCCH transmitted by the network device 102.

For example, the information field (or field) where the first information is located may be used as a reserved bit, and when multiple PRACH transmissions are initiated, the terminal may ignore the information field (or field). Alternatively, when multiple PRACH transmissions are initiated, the information field (or field) where the first information is located may be directly removed from the DCI. Based on this, the terminal may need to blindly check the sizes of two different DCIs to determine whether to perform multiple PRACH transmissions.

In some embodiments, the names of information and the like are not limited to the names recorded in the embodiments, "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, the names of information and the like are not limited to the names recorded in the embodiments, "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "physical downlink shared channel (PDSCH)", "DL data" and the like may be used interchangeably, and terms such as "physical uplink shared channel (PUSCH)", "UL data" and the like may be used interchangeably.

In some embodiments, terms "radio", "wireless", "radio access network (RAN)", "access network (AN)" and "RAN-based" may be used interchangeably.

In some embodiments, terms such as "resource block (RB)", "physical resource block (PRB)", "sub-carrier group (SCG)", "resource element group (REG)", "PRB pair", "RB pair", "resource element (RE)" and "sub-carrier" may be used interchangeably.

In some embodiments, terms such as "acquire", "obtain", "get", "receive", "transmit", "bidirectionally transmit" and "transmit and/or receive" may be used interchangeably, and may be interpreted as receiving from other entities, obtaining from protocols, obtaining from higher layers, obtaining via processing by itself, independent realization and so on.

In some embodiments, terms such as "send", "emit", "report", "distribute", "transmit", "bidirectionally transmit", "transmit and/or receive" and the like may be used interchangeably.

In some embodiments, terms such as "certain", "preset", "predetermine", "set", "indicate", "particular", "arbitrary", "first" and the like may be used interchangeably, and "certain A", "preset A", "predetermined A", "set A", "indicated A", "particular A", "arbitrary A", "first A" and the like may be interpreted as an A pre-specified in a protocol, an A obtained through setting, configuration or indication, or a particular A, a certain A, an arbitrary A or a first A, which is not limited here.

In some embodiments, the determination or judgment may be made by a value (0 or 1) represented by one bit, by a true or false value (boolean) represented as true or false, or a numerical comparison (for example, comparison with a predetermined value), which it is not limited here.

In some embodiments, reference may be made to other optional implementations described before or after the specification corresponding to Fig. 2B.

Fig. 3A is a flowchart of a random access method according to an embodiment of the present disclosure. As shown in Fig. 3A, the embodiment of the present disclosure relates to a random access method, which is performed by a terminal 101, and includes the following steps.

In step S3101, first information transmitted by a network device 102 is received.

For optional implementations of step S3101, reference may be made to the optional implementations of step S2101 in Fig. 2A and other related parts of the embodiment involved in Fig. 2A, which will not be repeated here.

In some embodiments, the terminal 101 receives the first information transmitted by the network device 102, but the present disclosure is not limited to this, and the terminal 101 may also receive the first information sent by other entities.

In some embodiments, the terminal 101 acquires the first information specified by a protocol.

In some embodiments, step S3101 is omitted, and the terminal 101 autonomously knows at least one RO indicated by the first information, or the at least one RO is default.

In step S3102, a PRACH is transmitted to the network device 102.

For optional implementations of step S3102, reference may be made to the optional implementations of step S2102 in Fig. 2A and other related parts of the embodiment involved in Fig. 2A, which will not be repeated here.

The communication method according to the embodiment of the present disclosure may include at least one of steps S3101 to S3102. For example, step S3101 may be implemented as an independent embodiment, step S3102 may be implemented as an independent embodiment, steps S3101+S3102 may be implemented as an independent embodiment, and so on, but the present disclosure is not limited to this.

In some embodiments, step 3101 is optional, and this step may be omitted or replaced in different embodiments.

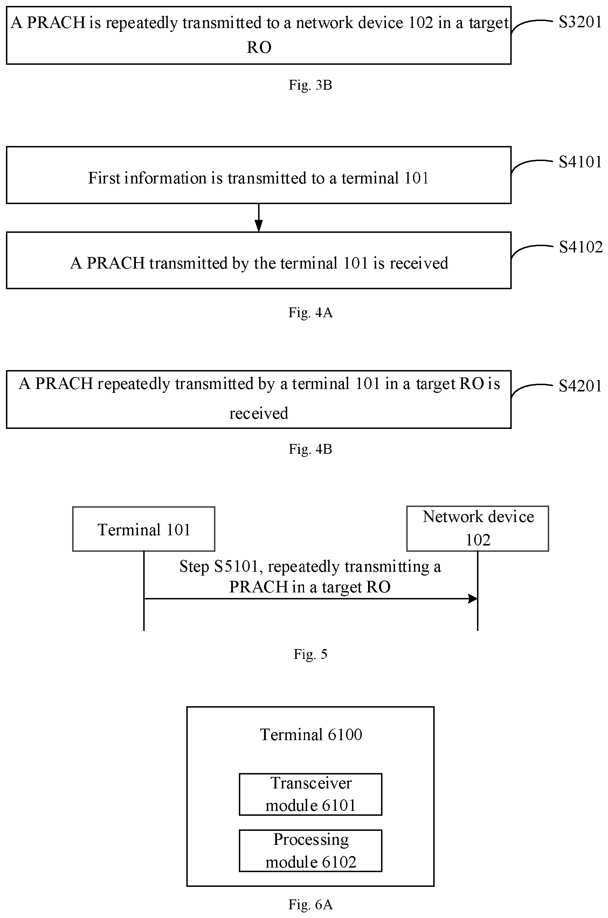

Fig. 3B is a flowchart of a random access method according to an embodiment of the present disclosure. As shown in Fig. 3B, the embodiment of the present disclosure relates to a random access method, which is performed by a terminal 101, and includes the following steps.

In step S3201, a PRACH is repeatedly transmitted to a network device 102 in a target RO.

For optional implementations of step S3201, reference may be made to the optional implementations of step S2102 of Fig. 2A, step S2201 of Fig. 2B, and step S3202 of Fig. 3A, and other related parts of the embodiments involved in Figs. 2A, 2B and 3A, which are not repeated here.

Optionally, in some embodiments, the target RO is determined by the terminal 101 based on first information transmitted by the network device 102. For optional implementations thereof, reference may be made to the optional implementations of step S2101 in Fig. 2A and step S3201 in Fig. 3A, and other related parts of the embodiments involved in Figs. 2A and 3A, which are not repeated here.

Fig. 4A is a flowchart of a random access method according to an embodiment of the present disclosure. As shown in Fig. 4A, the embodiment of the present disclosure relates to a random access method, which is performed by a network device 102 and includes the following steps.

In step S4101, first information is transmitted to a terminal 101.

For optional implementation of step S4101, reference may be made to the optional implementations of step S2101 in Fig. 2A and other related parts of the embodiment involved in Fig. 2A, which will not be repeated here.

In some embodiments, the network device 102 transmits the first information to the terminal 101, but the present disclosure is not limited to this, and the network device 102 may also transmit configuration information to other entities.

In step S4102, a PRACH transmitted by the terminal 101 is received.

For optional implementations of step S4102, reference may be made to the optional implementations of step S2102 in Fig. 2A and other related parts of the embodiment involved in Fig. 2A, which will not be repeated here.

The communication method according to the embodiment of the present disclosure may include at least one of step S4101 to step S4102. For example, step S4101 may be implemented as an independent embodiment, step S4102 may be implemented as an independent embodiment, steps S4101+S4102 may be implemented as an independent embodiment, and so on, but the present disclosure is not limited to this.

In some embodiments, step S4101 is optional, and this step may be omitted or replaced in different embodiments.

Fig. 4B is a flowchart of a random access method according to an embodiment of the present disclosure. As shown in Fig. 4B, the embodiment of the present disclosure relates to a random access method, which is performed by a network device 102 and includes the following steps.

In step S4201, a PRACH repeatedly transmitted by a terminal 101 in a target RO is received.

For optional implementations of step S4201, reference may be made to the optional implementations of step S2102 of Fig. 2A, step S2201 of Fig. 2B, and step S4102 of Fig. 4A, and other related parts of the embodiments involved in Figs. 2A, 2B and 4A, which are not repeated here.

Optionally, in some embodiments, the target RO is determined by the terminal 101 based on first information transmitted by the network device 102. For optional implementations thereof, reference may be made to the optional implementations of step S2101 in Fig. 2A and step S4201 in Fig. 4A, and other related parts in the embodiments involved in Figs. 2A and 4A, which are not repeated here.

Fig. 5 is a flowchart of a random access method according to an embodiment of the present disclosure. As shown in Fig. 5, the method according to the embodiment of the present disclosure is performed by a communication system 100, and includes the following step.

In step S5101, a terminal 101 repeatedly transmits a PRACH to a network device in a target RO, and the number of the target RO is the same as the number of transmissions of the PRACH.

For optional implementations of step S5101, reference may be made to the steps in any one or more of the embodiments of Figs. 2A-2B, 3A-3B and 4A-4B, and other related parts of the embodiments involved in Figs. 2A-2B, 3A-3B and 4A-4B.

In some embodiments, the above method may include the methods described in the embodiments at the communication system side, the terminal side, the network device side, etc., and will not be repeated here.

In this embodiment or example, in the absence of contradiction, the steps may be implemented independently, in any combination, or in any exchanged order; and optional implementations or optional examples may be combined arbitrarily, and may also be combined freely with any steps of other embodiments or other examples.

The following is an illustrative introduction to the methods described in the above embodiments.

For multiple PRACH transmissions, when the mapping from SSB to RO is configured to be one-to-many (N<1), it may be considered to redefine/reconfigure the RO mask index in at least one of the following ways.

Way 1: configuration of the RO mask index is not supported for multiple PRACH transmissions.

Optionally, when multiple PRACH transmissions are combined with other features to use the same PRACH resource, the configuration of the RO mask index is also not performed.

Way 2: for multiple PRACH transmissions and SSB-to-RO configured to be one-to-many, the configuration of the RO mask index is supported. The RO mask index is redefined as a time domain RO group mask index.

As an example, the mapping ratio of SSB-to-RO is 1/16, FDMed RO=1, and PRACH repetition number=4. This means that one SSB is mapped to four time domain RO groups. Further, one or more of the four time domain RO groups may be selected for multiple PRACH transmissions through the RO mask index, and multiple PRACH transmissions will not be performed on the remaining unselected ROs.

Way 3: the RO mask index may indicate one or more of FDMed ROs, and one of indicated frequency domain positions is used by multiple PRACHs for multiple PRACH transmissions.

Once the frequency domain position of the RO for the first transmission is selected, the frequency domain positions for subsequent PRACH transmissions are all the same as the frequency domain position for the first transmission, and ROs used for different PRACH transmissions are mapped to the same SSB.

Optionally, one possible way is that the FDMed ROs refer to the ROs mapped to the same SSB set.

Optionally, there is another possible way, which is also applicable to one-to-many SSB-to-RO mapping and many-to-one SSB-to-RO mapping.

This configuration needs to ensure that the RO to which any one of SSB indexes indicated by a SSB burst is mapped may be selected.

Way 4: for a transmission mode using RO hopping, the RO mask index may indicate one or more starting frequency domain positions of a first valid RO in a RO group, and the valid RO positions of subsequent transmissions are determined by the frequency hopping offset.

Way 5: the RO mask index may also be indexed to any one or more RO groups in period X for multiple PRACH transmissions, and multiple PRACH transmissions will not be performed on the remaining RO groups.

Mode 6: when one SSB is mapped to N ROs, M ROs among the N ROs are indicated to be used for multiple PRACH transmissions, where M is less than or equal to N. For example, it may be indicated by means of the bitmap. M may be the same as a repeated-transmission number K, or an integer multiple of K, or M may be any value. N ROs may be time domain ROs or frequency domain ROs, or N is the number of ROs whose time domain positions and frequency domain positions are numbered together (for example, the N ROs to which one SSB is mapped are numbered in the frequency domain first and then in the time domain, and then available ROs are indicated by means of the bitmap or codepoint). Available time domain ROs may be indicated by field#1, available frequency domain ROs may be indicated by field#2, and both of the available time domain ROs and the available frequency domain ROs are indicated by the bitmap, which is similar to a two-dimensional matrix. Only when (bit#m for field#1, bit#n for field#2) is (1, 1), it means that a RO whose time domain position is #m and frequency domain position is #n may be used for multiple PRACH transmissions.

In particular, for ways 2, 3, 4, 5 and 6, different PRACH transmission numbers sharing the same RO configuration may have different RO mask indexes.

Embodiments of the present disclosure also provide a device for implementing any of the above methods, for example, a device including units or modules for implementing the steps executed by the terminal in any of the above methods; and for another example, another device including units or modules for implementing the steps executed by the network device (such as the access network device, the core network function node, the core network device, etc.) in any of the above methods.

It should be understood that the division of units or modules in the above device is only a division of logical functions. In actual implementation, they may be fully or partially integrated into one physical entity, or may be physically separated. In addition, the units or modules in the device may be implemented in the form of a processor calling software. For example, the device includes a processor, the processor is connected to a memory, the memory stores instructions, and the processor calls the instructions stored in the memory to implement any one of the above methods or the functions of the units or modules of the above device. The processor is, for example, a general-purpose processor, such as a central processing unit (CPU) or a microprocessor, and the memory is a memory inside the device or a memory outside the device. Alternatively, the units or modules in the device may be implemented in the form of a hardware circuit. The functions of some or all units or modules may be implemented by designing the hardware circuit. The hardware circuit may be understood as one or more processors. For example, in an implementation, the hardware circuit is an application-specific integrated circuit (ASIC), and the functions of some or all units or modules above are implemented by designing a logical relationship of components in the circuit. As another example, in another implementation, the hardware circuit may be implemented by a programmable logic device (PLD). Taking a field programmable gate array (FPGA) as an example, it may include a large number of logic gate circuits, and a connection relationship between the logic gate circuits is configured through configuration files, thereby implementing the functions of some or all units or modules above. All units or modules of the above device may be fully implemented in the form of the processor calling software, or fully implemented in the form of the hardware circuit, or partially implemented in the form of the processor calling software and partially implemented in the form of the hardware circuit.

In the embodiments of the present disclosure, a processor is a circuit with a signal processing capability. In an implementation, the processor may be a circuit with a capability to read and run instructions, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, a process of the processor loading configuration files to implement hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

Fig. 6A is a block diagram of a terminal proposed by an embodiment of the present disclosure. As shown in Fig. 6A, a terminal 6100 may include at least one of a transceiver module 6101 and a processing module 6102. In some embodiments, the transceiver module is configured to repeatedly transmit a physical random access channel (PRACH) to a network device in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

Optionally, the transceiver module is used to perform at least one of the communication (transmitting and/or receiving) steps (such as step S2101, step S2102, step S2201, but not limited to this) performed by the terminal 101 in any of the above methods, which will not be repeated here. Optionally, the processing module is used to perform at least one of other steps performed by the terminal 101 in any of the above methods, which will not be repeated here.

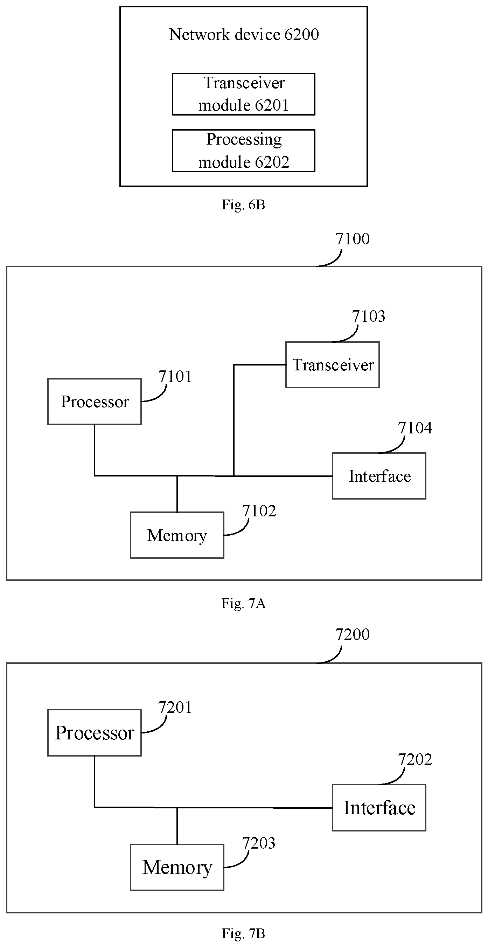

Fig. 6B is a block diagram of a network device proposed by an embodiment of the present disclosure. As shown in Fig. 6B, a network device 6200 may include at least one of a transceiver module 6201 and a processing module. In some embodiments, the transceiver module is configured to receive a physical random access channel (PRACH) repeatedly transmitted by a terminal in a target random access channel occasion (RO), where the number of the target RO is the same as the number of transmissions of the PRACH, the target RO is included in a plurality of candidate ROs, and the plurality of candidate ROs have a mapping relationship with a synchronization signal and physical broadcast channel block (SSB) index, or the plurality of candidate ROs have a mapping relationship with a SSB index set.

Optionally, the transceiver module is used to perform at least one of the communication (transmitting and/or receiving) steps (such as step S2101, step S2102, step S2201, but not limited to this) performed by the network device 102 in any of the above methods, which will not be repeated here. Optionally, the processing module is used to perform at least one of other steps performed by the network device 102 in any of the above methods, which will not be repeated here.

In some embodiments, the transceiver module may include a transmitting module and/or a receiving module, which may be separate or integrated. Optionally, the transceiver module may be replaced with a transceiver.

In some embodiments, the processing module may be one module or include a plurality of sub-modules. Optionally, the plurality of sub-modules respectively perform all or part of the steps required to be performed by the processing module. Optionally, the processing module may be replaced with a processor.

Fig. 7A is a block diagram of a communication device 7100 proposed by an embodiment of the present disclosure. The communication device 7100 may be a network device (e.g., an access network device, a core network device, etc.), a terminal (e.g., user equipment, etc.), a chip, chip system, or processor that supports the network device to perform any of the above methods, or a chip, chip system, or processor that supports the terminal to perform any of the above methods. The communication device 7100 may be used to implement the methods described in the above method embodiments, and for details, reference may be made to the descriptions in the above method embodiments.

As shown in Fig. 7A, the communication device 7100 includes one or more processors 7101. The processor 7101 may be a general-purpose processor or a special-purpose processor, for example, a baseband processor or a central processor. The baseband processor may be used to process communication protocols and communication data, and the central processor may be used to control communication devices (such as base stations, baseband chips, terminals, terminal chips, DUs or CUs, etc.), execute programs, and process program data. The communication device 7100 is used to perform any of the above methods.

In some embodiments, the communication device 7100 further includes one or more memories 7102 for storing instructions. Optionally, all or part of the memories 7102 may be located outside the communication device 7100.

In some embodiments, the communication device 7100 further includes one or more transceivers 7103. When the communication device 7100 includes one or more transceivers 7103, the transceivers 7103 perform at least one of the communication (transmitting and/or receiving) steps (such as step S2101, step S2102, step S2201, but not limited to this) in the above methods, and the processor 7101 performs at least one of the other steps.

In some embodiments, the transceiver may include a receiver and/or a transmitter, which may be separate or integrated. Optionally, terms such as transceiver, transceiving unit, transceiving machine, transceiving circuit, etc. may be used interchangeably, terms such as transmitter, transmitting unit, transmitting machine, transmitting circuit, etc. may be used interchangeably, and terms such as receiver, receiving unit, receiving machine, receiving circuit, etc. may be used interchangeably.

In some embodiments, the communication device 7100 may include one or more interface circuits 7104. Optionally, the interface circuit 7104 is connected to the memory 7102. The interface circuit 7104 may be used to receive signals from the memory 7102 or other devices, and may be used to send signals to the memory 7102 or other devices. For example, the interface circuit 7104 may read an instruction stored in the memory 7102 and send the instruction to the processor 7101.

The communication device 7100 described in the above embodiment may be a network device or a terminal, but the scope of the communication device 7100 described in the present disclosure is not limited to this, and the structure of the communication device 7100 may not be limited to Fig. 7A. The communication device may be a stand-alone device or may be part of a large device. For example, the communication device may be: 1) an independent integrated circuit (IC), or a chip, or a chip system or subsystem; (2) a set with one or more ICs, optionally, the above IC set may also include a storage unit for storing data and programs; 3) an ASIC, such as a modem; 4) a module that may be embedded in other devices; 5) a receiver, a terminal, a smart terminal, a cellular phone, a wireless device, a handset, a mobile unit, a vehicle-mounted device, a network device, a cloud device, an artificial intelligence device, etc.; 6) others, etc.

Fig. 7B is a block diagram of a chip 7200 proposed by an embodiment of the present disclosure. In a case that the communication device 7100 may be a chip or a chip system, reference may be made to the schematic diagram of the chip 7200 shown in Fig. 7B, but the present disclosure is not limited to this.

The chip 7200 includes one or more processors 7201, and the chip 7200 is used to perform any of the above methods.

In some embodiments, the chip 7200 also includes one or more interface circuits 7202. Optionally, the interface circuit 7202 is connected to the memory 7203. The interface circuit 7202 may be used to receive signals from the memory 7203 or other devices, and the interface circuit 7202 may be used to send signals to the memory 7203 or other devices. For example, the interface circuit 7202 may read an instruction stored in the memory 7203 and send the instruction to the processor 7201.

In some embodiments, the interface circuit 7202 performs at least one of the communication (transmitting and/or receiving) steps (such as step S2101 and step S2102, but not limited to this) in the above methods, and the processor 7201 performs at least one of other steps (such as step S2103, but not limited to this).

In some embodiments, terms such as interface circuit, interface, transceiver pin, transceiver, etc. may be used interchangeably.

In some embodiments, the chip 7200 further includes one or more memories 7203 for storing instructions. Optionally, all or part of the memories 7203 may be located outside the chip 7200.

The present disclosure also proposes a storage medium on which instructions are stored, which, when executed on the communication device 7100, cause the communication device 7100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure also proposes a program product which, when executed by the communication device 7100, causes the communication device 7100 to perform any of the above methods. Optionally, the program product is a computer program product.

The present disclosure also proposes a computer program that, when run on a computer, causes the computer to perform any of the above methods.

The above embodiments may be realized in whole or in part by software, hardware, firmware or any combination thereof. When implemented by software, it may be fully or partially implemented in the form of a computer program product. The computer program product includes one or more computer programs. When the computer program is loaded and executed on a computer, the flows or functions according to the embodiments of the present disclosure are generated in whole or in part. The computer may be a general-purpose computer, a special-purpose computer, a computer network, or other programmable devices. The computer program may be stored in a computer-readable storage medium or transmitted from one computer-readable storage medium to another. For example, the computer program may be transmitted from a website, computer, server or data center to another website, computer, server or data center by in a wired (such as coaxial cables, optical fiber, digital subscriber lines (DSLs)) or wireless (such as infrared, wireless, microwaves, etc.) manner. The computer-readable storage medium may be any available medium that a computer may access or a data storage device such as a server, a data center and the like that contains one or more integrated available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

Those ordinary skilled in the related art will appreciate that the units and algorithm steps of each example described in conjunction with the embodiments disclosed herein may be implemented in electronic hardware, or a combination of computer software and electronic hardware. Whether these functions are performed in hardware or software depends on the specific application and design constraints of the technical scheme. Those skilled in the art may use different methods to implement the described functions for each specific application, but such implementation should not be considered as falling outside the scope of the present disclosure.

Those skilled in the related art may clearly understand that, for the convenience and brevity of description, for the specific working processes of the systems, devices and units described above, reference may be made to the corresponding processes in the aforementioned method embodiments, and a description thereof will not be repeated here.

The above only relates to specific implementations of the present disclosure, but the scope of the present disclosure is not limited thereto. Any person skilled in the art who is familiar with the technical field may easily think of changes or substitutions within the technical scope disclosed in the present disclosure, which should be included in the scope of the present disclosure. Therefore, the scope of the present disclosure should be based on the scope of the claims.

## Claims

1. A random access method, performed by a terminal, and comprising:
repeatedly transmitting a physical random access channel (PRACH) to a network device in a target random access channel occasion (RO),
wherein the number of the target RO is the same as the number of transmissions of the PRACH, the target RO is comprised in a plurality of candidate ROs, and the plurality of candidate ROs have a mapping relationship with a synchronization signal and physical broadcast channel block (SSB) index, or the plurality of candidate ROs have a mapping relationship with a SSB index set.

2. The method according to claim 1, further comprising:
receiving first information transmitted by the network device, wherein the first information is configured to determine the target RO from the plurality of candidate ROs.

3. The method according to claim 2, wherein the first information indicates one or more groups of ROs among the plurality of candidate ROs,
wherein each group of the one or more groups of ROs comprises a first quantity of ROs in a time domain, the first quantity is the same as the number of transmissions of the PRACH, and the target RO is one group of the one or more groups of ROs indicated by the first information.

4. The method according to claim 2, wherein the first information indicates one or more ROs among the plurality of candidate ROs, and frequency domain positions of the ROs indicated by the first information are different,
wherein the target RO has a same frequency domain position, and the frequency domain position of the target RO is one of the frequency domain positions of the one or more ROs indicated by the first information.

5. The method according to claim 4, wherein the target RO has a mapping relationship with an SSB index.

6. The method according to claim 4 or 5, wherein the one or more ROs indicated by the first information have a mapping relationship with an SSB index set.

7. The method according to claim 2, wherein the first information indicates a plurality of ROs among the plurality of candidate ROs,
wherein the first information comprises a first information field and a second information field, the first information field indicates time domain positions of the plurality of ROs, the second information field indicates frequency domain positions of the plurality of ROs, and the plurality of ROs indicated by the first information comprise the target RO.

8. The method according to claim 2, wherein the first information indicates one or more ROs among the plurality of candidate ROs, and frequency domain positions of the ROs indicated by the first information are different,
wherein the target RO is frequency-hopped, a starting frequency domain position of the target RO is one of the frequency domain positions of the one or more ROs indicated by the first information, and a frequency domain position of the target RO is determined based on the starting frequency domain position and a frequency hopping offset.

9. The method according to claim 2, wherein the first information indicates one or more groups of ROs in a first time period,
wherein each group of the one or more groups of ROs comprises a first quantity of ROs in a time domain, the first quantity is the same as the number of transmissions of the PRACH, and the target RO is one group of the one or more groups of ROs indicated by the first information.

10. The method according to any one of claims 2-9, wherein the first information has a corresponding relationship with the number of transmissions of the PRACH.

11. The method according to any one of claims 2-9, wherein the first information has a corresponding relationship with a feature or a feature combination supported by the terminal.

12. A random access method, performed by a network device, and comprising:
receiving a physical random access channel (PRACH) repeatedly transmitted by a terminal in a target random access channel occasion (RO),
wherein the number of the target RO is the same as the number of transmissions of the PRACH, the target RO is comprised in a plurality of candidate ROs, and the plurality of candidate ROs have a mapping relationship with a synchronization signal and physical broadcast channel block (SSB) index, or the plurality of candidate ROs have a mapping relationship with a SSB index set.

13. The method according to claim 12, further comprising:
transmitting first information to the terminal, wherein the first information is configured to determine the target RO from the plurality of candidate ROs.

14. The method according to claim 13, wherein the first information indicates one or more groups of ROs among the plurality of candidate ROs,
wherein each group of the one or more groups of ROs comprises a first quantity of ROs in a time domain, the first quantity is the same as the number of transmissions of the PRACH, and the target RO is one group of the one or more groups of ROs indicated by the first information.

15. The method according to claim 13, wherein the first information indicates one or more ROs among the plurality of candidate ROs, and frequency domain positions of the ROs indicated by the first information are different,
wherein the target RO has a same frequency domain position, and the frequency domain position of the target RO is one of the frequency domain positions of the one or more ROs indicated by the first information.

16. The method according to claim 15, wherein the target RO has a mapping relationship with an SSB index.

17. The method according to claim 15 or 16, wherein the one or more ROs indicated by the first information have a mapping relationship with an SSB index set.

18. The method according to claim 13, wherein the first information indicates a plurality of ROs among the plurality of candidate ROs,
wherein the first information comprises a first information field and a second information field, the first information field indicates time domain positions of the plurality of ROs, the second information field indicates frequency domain positions of the plurality of ROs, and the plurality of ROs indicated by the first information comprise the target RO.

19. The method according to claim 13, wherein the first information indicates one or more ROs among the plurality of candidate ROs, and frequency domain positions of the ROs indicated by the first information are different,
wherein the target RO is frequency-hopped, a starting frequency domain position of the target RO is one of the frequency domain positions of the one or more ROs indicated by the first information, and a frequency domain position of the target RO is determined based on the starting frequency domain position and a frequency hopping offset.

20. The method according to claim 13, wherein the first information indicates one or more groups of ROs in a first time period,
wherein each group of the one or more groups of ROs comprises a first quantity of ROs in a time domain, the first quantity is the same as the number of transmissions of the PRACH, and the target RO is one group of the one or more groups of ROs indicated by the first information.

21. The method according to any one of claims 13-19, wherein the first information has a corresponding relationship with the number of transmissions of the PRACH.

22. The method according to any one of claims 13-19, wherein the first information has a corresponding relationship with a feature or a feature combination supported by the terminal.

23. A random access method, comprising:
repeatedly transmitting, by a terminal, a physical random access channel (PRACH) to a network device in a target random access channel occasion (RO),
wherein the number of the target RO is the same as the number of transmissions of the PRACH, the target RO is comprised in a plurality of candidate ROs, and the plurality of candidate ROs have a mapping relationship with a synchronization signal and physical broadcast channel block (SSB) index, or the plurality of candidate ROs have a mapping relationship with a SSB index set.

24. A terminal, comprising:
a transceiver module configured to repeatedly transmit a physical random access channel (PRACH) to a network device in a target random access channel occasion (RO),
wherein the number of the target RO is the same as the number of transmissions of the PRACH, the target RO is comprised in a plurality of candidate ROs, and the plurality of candidate ROs have a mapping relationship with a synchronization signal and physical broadcast channel block (SSB) index, or the plurality of candidate ROs have a mapping relationship with a SSB index set.

25. A network device, comprising:
a transceiver module configured to receive a physical random access channel (PRACH) repeatedly transmitted by a terminal in a target random access channel occasion (RO),
wherein the number of the target RO is the same as the number of transmissions of the PRACH, the target RO is comprised in a plurality of candidate ROs, and the plurality of candidate ROs have a mapping relationship with a synchronization signal and physical broadcast channel block (SSB) index, or the plurality of candidate ROs have a mapping relationship with a SSB index set.

26. A terminal, comprising:
one or more processors,
wherein the terminal is configured to perform the random access method according to any one of claims 1-11.

27. A network device, comprising:
one or more processors,
wherein the network device is configured to perform the random access method according to any one of claims 12-22.

28. A communication system, comprising a terminal and a network device, wherein the terminal is configured to perform the random access method according to any one of claims 1-11, and the network device is configured to perform the random access method according to any one of claims 12-22.

29. A storage medium, storing instructions which are configured to, when executed on a communication device, cause the communication device to perform the random access method according to any one of claims 1-11 or claims 12-22.
